# EUROPÄISCHE PATENTSCHRIFT

(11) **EP 1 338 363 B1**
(45) Veröffentlichungstag und Bekanntmachung des Hinweises auf die Patenterteilung: **20.10.2004**
(21) Anmeldenummer: 02027333.0
(22) Anmeldetag: 07.12.2002
(51) Int. Cl.: B23B 31/18

(54) **Kugelbolzenfutter**
Chuck with partially spherical jaw support
Mandrin de serrage ayant le support des mâchoires partiellement sphérique

(30) Priorität: 22.02.2002 DE 10207567
(43) Veröffentlichungstag der Anmeldung: 27.08.2003
(73) Patentinhaber: Röhm GmbH, 89567 Sontheim (DE)
(72) Erfinder: Röhm, Günter Horst, 89567 Sontheim (DE); Taglang, Johann, 89441 Medlingen (DE)
(74) Vertreter: Hentrich, Swen Dipl.-Phys. Dr.

(56) Entgegenhaltungen:
- US-A- 4 932 674
- US-A- 5 820 137
- US-A- 6 036 197

## Beschreibung

Die Erfindung betrifft ein Kugelbolzenfutter mit einem in einem Futterkörper axial verstellbar angeordneten Spannkolben, der mit einer Mehrzahl dem Futterkörper zugeordneten, zum Anschluß der Spannbacken ausgebildeten Kugelbolzen gekoppelt ist, der aus dem Dokument US 6 036 197 A bekannt ist.

Kugelbolzenfutter sind aus der Praxis bekannt und werden insbesondere immer dann für Spannzwecke eingesetzt, wenn bei der Anlage der Spannbacken an das zu spannende Werkstück, insbesondere zur Anpassung an dessen Umfangsgestalt, ein Bewegungsfreiheitsgrad gewünscht ist, der durch die Kugelbolzen bereitgestellt wird, die sich um ihren Kugelmittelpunkt drehend bewegen können.

Der Erfindung liegt die Aufgabe zugrunde, ein Kugelbolzenfutter der eingangs genannten Art so auszubilden, daß beim Spannvorgang optional neben der radialen, zentrischen Lage des Werkstückes auch dessen axiale Lage präzise und mit hoher Reproduzierbarkeit festgelegt werden kann.

Diese Aufgabe wird bei einem Kugelbolzenfutter der eingangs genannten Art dadurch gelöst, daß die Kugelbolzen an einer gegen die Kraft mindestens einer Feder axial gegenüber dem Futterkörper verstellbar gelagerten Futterplatte angeordnet sind, und daß ein Schaltteil zwischen einer den Federweg der Futterplatte blockierenden Sperrstellung und einer den Federweg freigebenden Niederzugstellung verstellbar ist.

Mit diesem Kugelbolzenfutter ist der Vorteil verbunden, daß bei einem Spannvorgang, bei dem das Schaltteil in die Niederzugstellung geschaltet ist, sich die Kugelbolzen zunächst an dem zu spannenden Werkstück anlegen und dann, wenn die durch den Spannkolben aufgebrachte Axialkraft die Federkraft übersteigt, zusammen mit der Futterplatte unter Kompression der Feder axial verstellt werden und dabei auch das Werkstück axial verstellen, vorzugsweise gegen einen Anschlag ziehen, so daß ein Niederzugeffekt realisiert ist. Besonders vorteilhaft dabei ist, daß die Realisierung des Niederzugeffektes nicht obligatorisch ist, sondern durch Umschalten des Schaltteiles auch ein Spannvorgang ohne Niederzugeffekt möglich ist.

Bevorzugt im Rahmen der Erfindung ist, daß die Futterplatte an in Führungsaufnahmen des Futterkörpers geführten Führungssäulen angeschlossen ist. Damit ist der Vorteil verbunden, daß eine für die Präzision und gute Reproduzierbarkeit des Spannvorganges erforderliche Führung der gegenüber dem Futterkörper beweglichen Futterplatte gewährleistet ist. Diese Gestaltung ermöglicht auch, daß das Schaltteil durch einen am Futterkörper um die Futterachse drehbar gelagerten Nockenring gebildet ist, der zur Zusammenwirkung mit den freien Enden der Führungssäulen vorgesehen ist. Dabei ergibt sich in vorteilhafter Weise, daß das Schaltteil um die Länge der Führungssäule von der Frontplatte entfernt am Futterkörper des Kugelbolzenfutters angeordnet sein kann, also eine räumliche Entzerrung der für den Spannvorgang erforderlichen Bauteile ermöglicht ist.

Um bei einem Ausschalten des Niederzugeffektes definierte Bedingungen für den Spannvorgang zu haben, ist vorgesehen, daß an den freien Enden der Führungssäulen ein in einer Ringnut um die Führungsaufnahmen aufgenommener Ringbund ausgebildet ist, der in der Sperrstellung des Nockenrings am Nutgrund anliegt, also die Frontplatte über die Führungssäulen unmittelbar am Nockenring anliegt, der den Ringbund gegen den Nutgrund als fest vorgegebenen Anschlag preßt.

Um den Nockenring zwischen der Sperrstellung und der Niederzugstellung verstellen zu können, ist das Kugelbolzenfutter so gestaltet, daß ein Sperrglied vorgesehen ist, das in einer radialen Führungsaufnahme mittels eines Schlüssels zwischen einer in den Nockenring eingreifenden Stellung und einer den Nockenring freigebenden, in eine Bolzenaufnahme des Spannkolbens eingreifenden Stellung verstellbar ist. Durch den Schlüssel kann die Drehung des Nockenringes zwischen der Niederzugstellung und der Sperrstellung bewirkt werden, zugleich ist aber durch die Einführung des Endes des Sicherungsglieds in die Bolzenaufnahme eine Sicherheitseinrichtung realisiert, um sicher zu stellen, daß der Spannkolben nicht verstellt und damit die Spannbacken nicht betätigt werden können. Die Hubkontrolle der Drehmaschine, der das Kugelbolzenfutter zugeordnet ist, verhindert dann zusätzlich als Sicherheitseinrichtung ein Anlaufen der Drehmaschine, so daß Verletzungen durch den eingesteckten Schlüssel verhindert sind.

Um nicht vor die Wahl gestellt zu sein, ein Werkstück entweder mit keiner oder der vollen Niederzugskraft spannen zu müssen, ist ein Verstellmittel zur Einstellung der Niederzugskraft über die Feder vorgesehen, wobei das Verstellmittel in konstruktiv einfacher Weise durch eine in der Futterplatte angeordnete Verstellschraube zur Kompression der Feder gebildet ist.

Ein hoch genauer Spannvorgang mit guter Reproduzierbarkeit erfordert auch eine präzise Lagerung des Kugelbolzens in der Futterplatte, die dadurch realisiert ist, daß der Kugelbolzen mittels eines Führungsstücks in der Futterplatte gelagert ist, und daß der Kugelbolzen durch einen Ring in einer Aufnahme des Führungsstücks gesichert ist.

Hinsichtlich der Einfachheit der Gestaltung ist dabei bevorzugt, daß der Ring als Gewindering mit einem Außengewinde ausgebildet ist, das in ein Innengewinde des Führungsstücks einschraubbar ist. Der Verbesserung der Lagerung dient auch, daß der Kugelbolzen einen Bolzenzapfen mit einer zur Zusammenwirkung mit dem Führungsstück vorgesehenen ersten Führungsfläche aufweist, durch die sichergestellt ist, daß die Kugelbolzen nur in eine Richtung, um den Kugelmittelpunkt drehend sich bewegen können. Das Führungsstück weist zur Ausrichtung gegenüber dem Futterkörper eine zweite Führungsfläche auf.

Da das Kugelbolzenfutter möglichst universell einsetzbar sein soll, sowohl zur Innenspannung als auch zur Außenspannung eines Werkstückes, ist es erforderlich, die Kugelbolzen mit den Führungsstücken zu verdrehen. Um dies zu ermöglichen, sind auf der Futterplatte zur Sicherung des Führungsstücks Spannpratzen zwischen einer Raststellung und einer Wechselstellung verschwenkbar gelagert. Dadurch ist erreicht, daß bei einer Verstellung der Spannpratzen aus der Raststellung in die Wechselstellung der Kugelbolzen mit dem Führungsstück axial verstellt und um 180° gedreht werden kann, so daß nach Überführung der Spannpratzen aus der Wechselstellung in die Raststellung bei gleichbleibender Verstellrichtung des Spannkolbens zwischen Außenspannung und Innenspannung gewechselt ist. Dazu ist weiterhin vorgesehen, daß im Spannkolben ein zur Zusammenwirkung mit den Keilschrägen des Kugelbolzens vorgesehener Ring zwischen zwei Rastsitzen drehbar gelagert ist, wobei zur Ausbildung des Rastsitzes im Ring ein durch die Kraft einer Feder beaufschlagter Raststift sowie im Spannkolben zwei Rastsenken vorgesehen sind.

Im folgenden wird die Erfindung an einem in der Zeichnung dargestellten Ausführungsbeispiel näher erläutert; es zeigen:

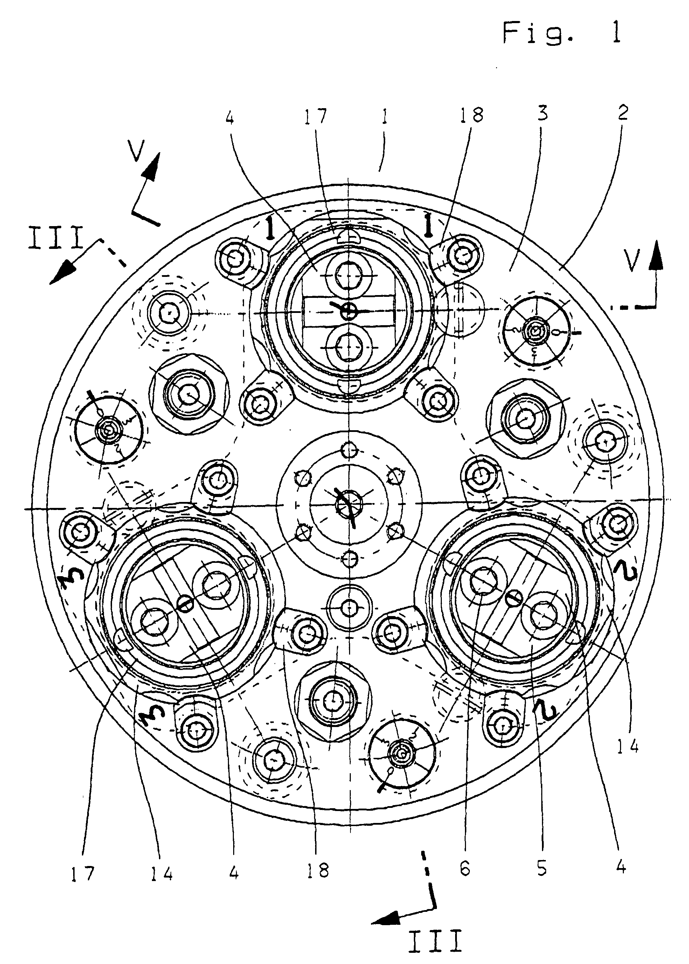

- Fig. 1: eine Vorderansicht auf das erfindungsgemäße Kugelbolzenfutter,

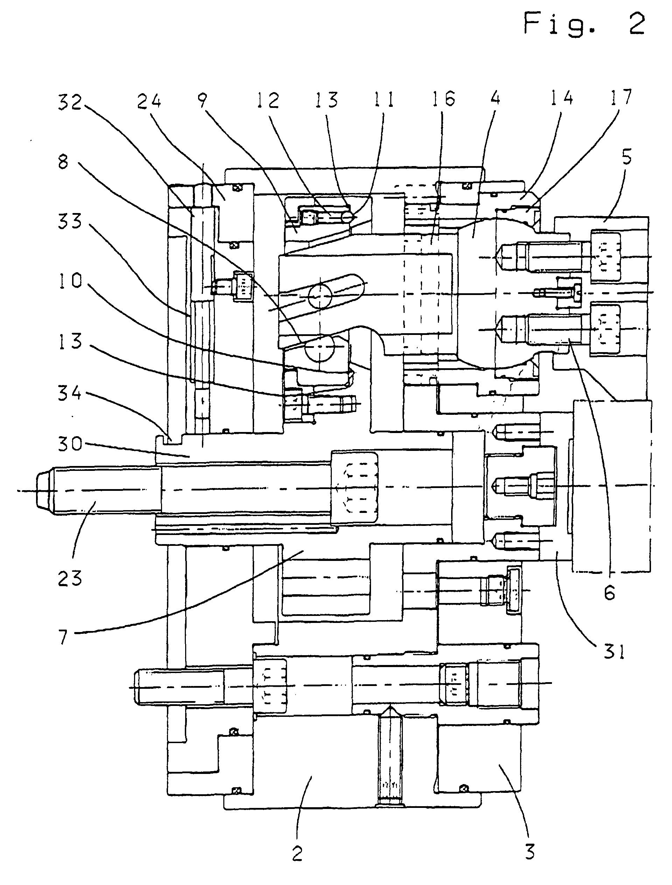

- Fig. 2: einen Längsschnitt durch das Kugelbolzenfutter aus Fig. 1 mit den Kugelbolzen sowie den Spannbacken in der der Außenspannung entsprechenden Stellung,

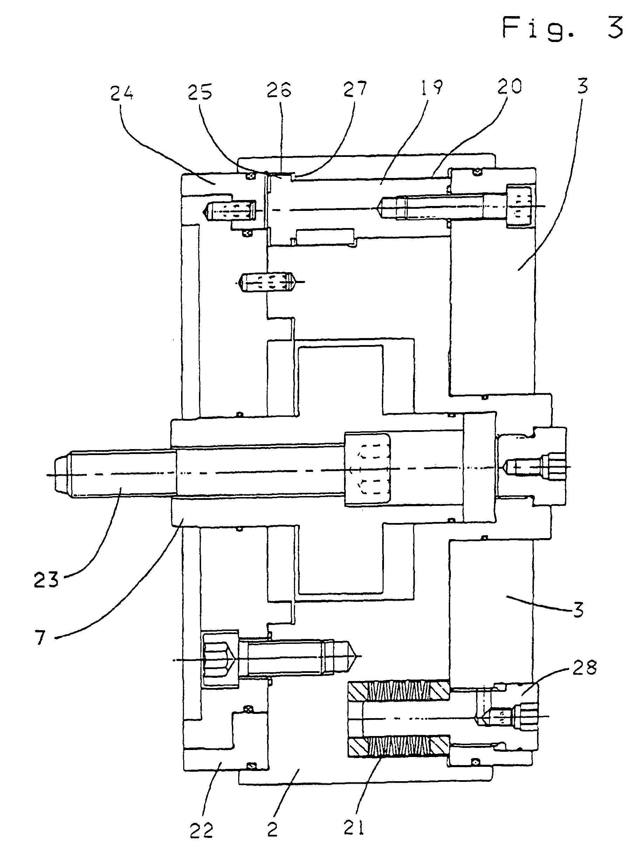

- Fig. 3: den Schnitt III-III aus Fig. 1 mit dem Nockenring in der Sperrstellung für eine spielfreie Abstützung der Futterplatte,

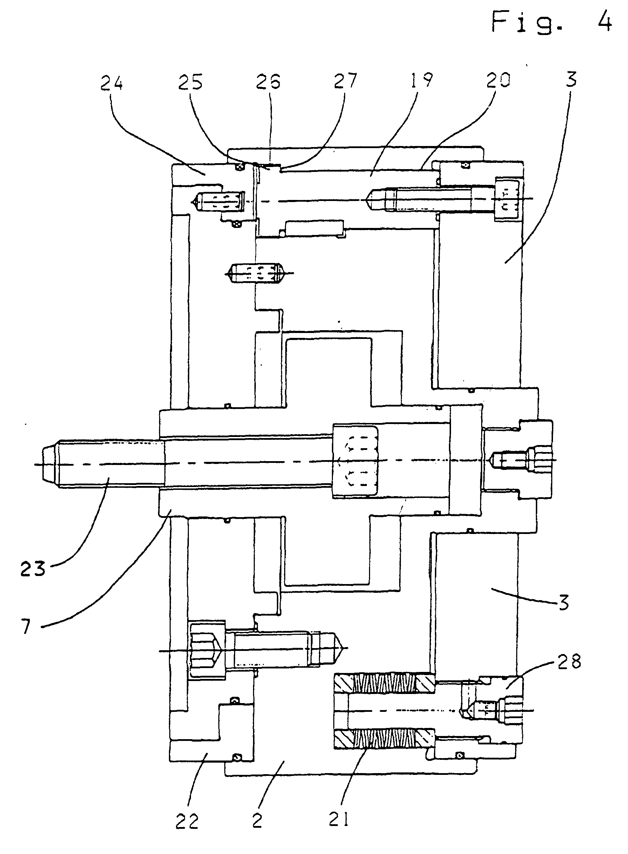

- Fig. 4: eine der Fig. 3 entsprechende Darstellung mit dem Nockenring in der Niederzugstellung und dem übertrieben, nicht maßstäblich dargestellten Spiel der Futterplatte gegenüber dem Futterkörper sowie des Nockenrings gegenüber der Führungssäule,

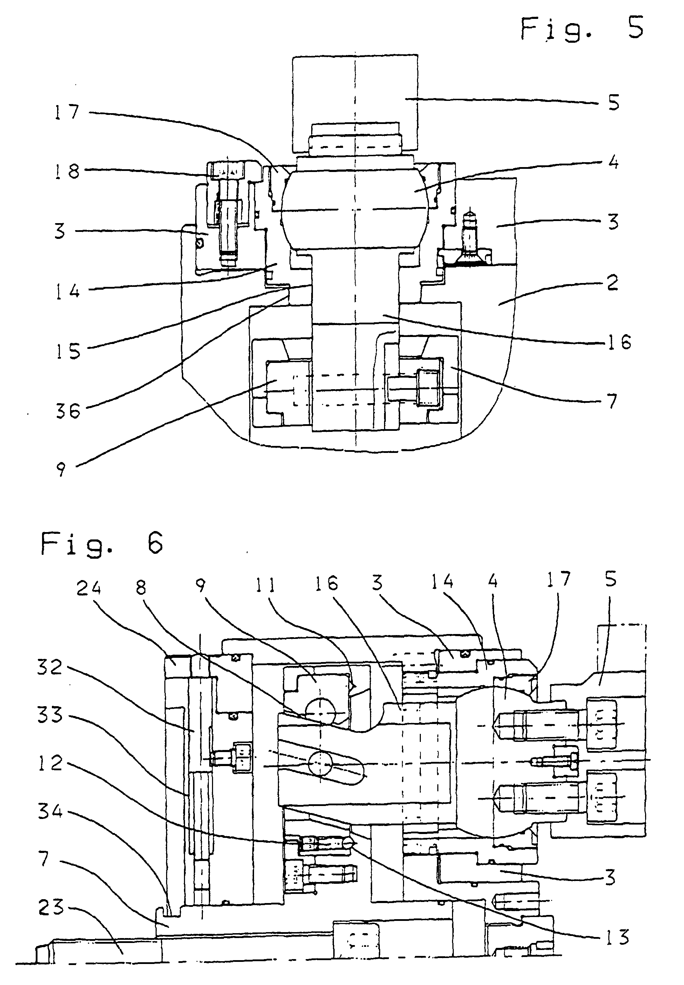

- Fig. 5: den Schnitt V-V aus Fig. 1,
- Fig. 6: eine der oberen Hälfte der Fig. 2 entsprechende Darstellung mit dem für die Innenspannung vorbereiteten Kugelbolzenfutter,

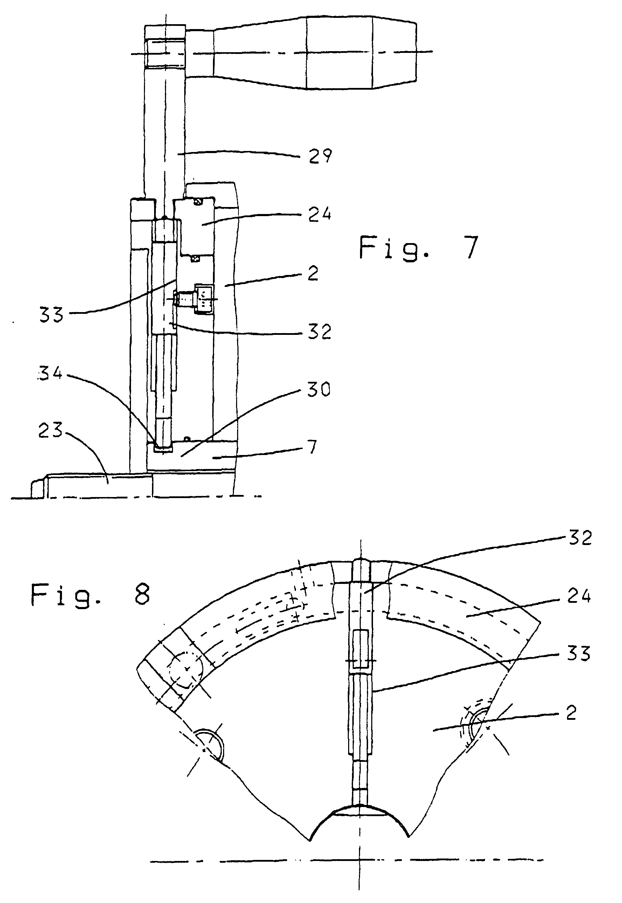

- Fig. 7: den in den Nockenring eingesteckten Schlüssel zur Verstellung des Sicherungsgliedes und des Nockenringes, und
- Fig. 8: einen Querschnitt durch die Schlüsselaufnahme.

In der Zeichnung dargestellt ist ein Kugelbolzenfutter 1, das einen Futterkörper 2 und an dessem axial freien Ende eine axial gegenüber dem Futterkörper 2 verstellbar angeordnete Futterplatte 3 aufweist, in der eine Mehrzahl, in dem gezeigten Ausführungsbeispiel drei, Kugelbolzen 4 gelagert sind, an denen Spannbacken 5 angeschlossen sind, in dem gezeigten Ausführungsbeispiel mittels einer Schraubverbindung 6. Die Kugelbolzen 4 sind mittels eines axial verstellbar im Futterkörper 2 gelagerten Spannkolbens 7 radial verstellbar, wobei im Spannkolben 7 ein zur Zusammenwirkung mit den Keilschrägen 8 des Kugelbolzens 4 vorgesehener Ring 9 zwischen zwei Rastsitzen 10, 11 drehbar gelagert ist. Zur Ausbildung der Rastsitze sind im Ring 9 ein durch die Kraft einer Feder beaufschlagter Raststift 12 sowie im Spannkolben 7 zwei Rastsenken 13 vorgesehen.

Die Kugelbolzen 4 sind mittels Führungsstücke 14 in der Futterplatte 3 gelagert, wobei die Führungsstücke 14 die Kugelbolzen 4 über erste Führungsflächen 15 abstützen, die an den Kugelbolzen 4 zugeordneten Bolzenzapfen 16 ausgebildet sind. Die Führungsstücke 14 selber weisen eine zweite Führungsfläche 36 auf, durch die die Führungsstücke 14 ihre Lage gegenüber dem Futterkörper 2 ausrichten. Die Kugelbolzen 4 sind durch jeweils einen Ring 17 in einer Aufnahme des zugehörigen Führungsstückes 14 gesichert, wobei der Ring 17 als Gewindering mit einem Außengewinde ausgebildet ist, das in ein Innengewinde des Führungsstückes 14 einschraubbar ist. Zur Sicherung des Führungsstückes 14 sind auf der Futterplatte 3 zwischen einer Raststellung und einer Wechselstellung verschwenkbare Spannpratzen 18 gelagert.

Die Futterplatte 3 ist an Führungssäulen 19 angeschlossen, die in Führungsaufnahmen 20 des Futterkörpers 2 geführt sind. Weiterhin ist die Futterplatte 3 gegen die Kraft von, in dem Ausführungsbeispiel drei, Federn 21 axial gegenüber dem Futterkörper 2 verstellbar gelagert, wobei weiterhin ein Schaltteil 22 vorgesehen ist, das zwischen einer den Federweg der Futterplatte 3 blockierenden Sperrstellung und einer den Federweg freigebenden Niederzugstellung verstellbar ist. Das Schaltteil 22 ist durch einen am Futterkörper 2 um die Futterachse 23 drehbar gelagerten Nockenring 24 gebildet, der mit den freien Enden der Führungssäulen 19 zusammenwirkt, die einen Ringbund 25 aufweisen, der in einer um die Führungsaufnahmen 20 ausgebildeten Ringnut 26 liegt. In der Sperrstellung des Nockenringes 24 liegt der Ringbund 25 am Nutgrund 27 an, ebenso in der Offenstellung des Kugelbolzenfutters 1 mit dem in der Niederzugstellung befindlichen Nockenring 24, da infolge der Federwirkung die Frontplatte 3 mit den Führungssäulen 19 und dem Ringbund 25 gegen den Nutgrund 27 gepreßt ist, sowohl die Frontplatte 3 als auch der Ringbund 25 aber über Spiel verfügen, bis diese zur Anlage an dem Futterkörper 2 bzw. dem Nockenring 24 gelangen. Die Niederzugskraft kann durch ein als Schraube ausgebildetes Verstellmittel 28 eingestellt werden.

Zur Verstellung des Nockenringes 24 ist ein Schlüssel 29 vorgesehen, der in den Nockenring 24 eingesteckt werden kann, um ein Sicherungsglied 32 radial in einer Führungsaufnahme 33 so zu verstellen, daß das Sicherungsglied 32 außer Eingriff mit dem Nockenring 24 kommt und zugleich in eine Bolzenaufnahme 34 einer Kolbenstange 30 des Spannkolbens 7 ragt, wodurch eine axiale Verstellung des Spannkolbens 7 blockiert ist.

Nachfolgend wird kurz der Spannvorgang geschildert, wenn der Nockenring 24 sich in der Niederzugstellung befindet, also der Ringbund 25 der Führungssäulen 19 aufgrund der Kraft der Federn 21, die die Frontplatte 3 vom Futterkörper 2 wegdrücken, am Nutgrund 27 der Ringnut 26 anliegt. Bei einem Spannvorgang legen die in der Futterplatte 3 gelagerten Kugelbolzen 4 sich zunächst an das zu spannende Werkstück an, um dann, wenn die durch den Spannkolben 7 aufgebrachte Axialkraft die anstehende Federkraft der Federn 21 übersteigt, um den Betrag des Spiels, der in der Regel nur wenige zehntel Millimeter beträgt, zwischen dem Ringbund 25 und dem Nockenring 24 unter entsprechender Niederzugs-Reibkraft am Werkstück dieses auf einen Anschlag 31 am Futterkörper 2 niederzuziehen und so den Niederzugseffekt zu verwirklichen.

Das Umstellen von Außenspannung auf Innenspannung geschieht, indem das Kugelbolzenfutter 1 in die hintere oder vordere Endstellung verfahren wird, in der dann die Spannpratzen 18 verstellt werden aus der Raststellung in die Wechselstellung, so daß man die Kugelbolzen 4 mit den Führungsstücken 14 so weit nach vorne ziehen kann, daß diese um 180° zu verdrehen sind. In dieser Stellung werden sie wieder zurückgedrückt und wieder durch die Spannpratzen 18 gesichert. Bei diesem Umstellen dreht sich der Ring 9 komplett mit und rastet in der anderen Rastlage mit dem Raststift 12 in den Rastsenken 13 ein.

## Patentansprüche

1. Kugelbolzenfutter mit einem in einem Futterkörper (2) axial verstellbar angeordneten Spannkolben (7), der mit einer Mehrzahl dem Futterkörper (2) zugeordneten, zum Anschluß der Spannbacken (5) ausgebildeten Kugelbolzen (4) gekoppelt ist, **dadurch gekennzeichnet, daß** die Kugelbolzen (4) an einer gegen die Kraft mindestens einer Feder (21) axial gegenüber dem Futterkörper (2) verstellbar gelagerten Futterplatte (3) angeordnet sind, und daß ein Schaltteil (22) zwischen einer den Federweg der Futterplatte (3) blockierenden Sperrstellung und einer den Federweg freigebenden Niederzugstellung verstellbar ist.

2. Kugelbolzenfutter nach Anspruch 1, **dadurch gekennzeichnet, daß** die Futterplatte (3) an in Führungsaufnahmen (20) des Futterkörpers (2) geführten Führungssäulen (19) angeschlossen ist.

3. Kügelbolzenfutter nach Anspruch 2, **dadurch gekennzeichnet, daß** das Schaltteil (22) durch einen am Futterkörper (2) um die Futterachse (23) drehbar gelagerten Nockenring (24) gebildet ist, der zur Zusammenwirkung mit den freien Enden der Führungssäulen (19) vorgesehen ist.

4. Kugelbolzenfutter nach Anspruch 3, **dadurch gekennzeichnet, daß** an den freien Enden der Führungssäulen (19) ein in einer Ringnut um die Führungsaufnahmen (20) aufgenommener Ringbund (25) ausgebildet ist, der in der Sperrstellung des Nockenrings (24) am Nutgrund (27) anliegt.

5. Kugelbolzenfutter nach Anspruch 3 oder 4, **dadurch gekennzeichnet, daß** ein Sperrglied (32) vorgesehen ist, das in einer radialen Führungsaufnahme (33) mittels eines Schlüssels (29) zwischen einer in den Nockenring (24) eingreifenden Stellung und einer den Nockenring (24) freigebenden, in eine Bolzenaufnahme (34) des Spannkolbens (7) eingreifenden Stellung verstellbar ist.

6. Kugelbolzenfutter nach einem der Ansprüche 1 bis 5, **dadurch gekennzeichnet, daß** ein Verstellmittel (28) zur Einstellung der Niederzugskraft über die Feder (21) vorgesehen ist.

7. Kugelbolzenfutter nach Anspruch 6, **dadurch gekennzeichnet, daß** das Verstellmittel (28) durch eine in der Futterplatte (3) angeordnete Verstellschraube zur Kompression der Feder (21) gebildet ist.

8. Kugelbolzenfutter nach einem der Ansprüche 1 bis 7, **dadurch gekennzeichnet, daß** der Kugelbolzen (4) mittels eines Führungsstücks (14) in der Futterplatte (3) gelagert ist.

9. Kugelbolzenfutter nach Anspruch 8, **dadurch gekennzeichnet, daß** der Kugelbolzen (4) durch einen Ring (17) in einer Aufnahme des Führungsstücks (14) gesichert ist.

10. Kugelbolzenfutter nach Anspruch 9, **dadurch gekennzeichnet, daß** der Ring (17) als Gewindering mit einem Außengewinde ausgebildet ist, das in ein Innengewinde des Führungsstücks (14) einschraubbar ist.

11. Kugelbolzenfutter nach einem der Ansprüche 8 bis 10, **dadurch gekennzeichnet, daß** der Kugelbolzen (4) einen Bolzenzapfen mit einer zur Zusammenwirkung mit dem Führungsstück (14) vorgesehenen ersten Führungsfläche (15) aufweist.

12. Kugelbolzenfutter nach einem der Ansprüche 8 bis 11, **dadurch gekennzeichnet, daß** das Führungsstück (14) zur Ausrichtung gegenüber dem Futterkörper (2) eine zweite Führungsfläche (36) aufweist.

13. Kugelbolzenfutter nach einem der Ansprüche 8 bis 12, **dadurch gekennzeichnet, daß** auf der Futterplatte (3) zur Sicherung des Führungsstücks (14) Spannpratzen (18) zwischen einer Raststellung und einer Wechselstellung verschwenkbar gelagert sind.

14. Kugelbolzenfutter nach einem der Ansprüche 1 bis 13, **dadurch gekennzeichnet, daß** im Spannkolben (7) ein zur Zusammenwirkung mit den Keilschrägen (8) des Kugelbolzens (4) vorgesehener Ring (9) zwischen zwei Rastsitzen (10, 11) drehbar gelagert ist.

15. Kugelbolzenfutter nach Anspruch 14, **dadurch gekennzeichnet, daß** zur Ausbildung des Rastsitzes (10, 11) im Ring (9) ein durch die Kraft einer Feder beaufschlagter Raststift (12) sowie im Spannkolben (7) zwei Rastsenken (13) vorgesehen sind.

## Claims

1. A ball pin chuck comprising a clamping piston (7) which is arranged axially displaceably in a chuck body (2) and which is coupled to a plurality of ball pins (4) which are associated with the chuck body (2) and which are adapted for connection of the clamping jaws (2), **characterised in that** the ball pins (4) are arranged on a chuck plate (3) which is mounted axially displaceably with respect to the chuck body (2) against the force of at least one spring (21), and that a shift member (22) is displaceable between a locking position of blocking the spring travel of the chuck plate (3) and a pull-down position of allowing the spring travel.

2. A ball pin chuck according to claim 1 **characterised in that** the chuck plate (3) is connected to guide posts (19) guided in guide receiving means (20) of the chuck body (2).

3. A ball pin chuck according to claim 2 **characterised in that** the shift member (22) is formed by a cam ring (24) mounted on the chuck body (2) rotatably about the chuck axis (23) and provided for co-operation with the free ends of the guide posts (19).

4. A ball pin chuck according to claim 3 **characterised in that** provided at the free ends of the guide posts (19) is an annular collar (25) which is accommodated in an annular groove around the guide receiving means (20) and which bears against the groove bottom (27) in the locking position of the cam ring (24).

5. A ball pin chuck according to claim 3 or claim 4 **characterised in that** there is provided a locking member (32) which is displaceable in a radial guide receiving means (33) by means of a key (29) between a position of engaging into the cam ring (24) and a position of releasing the cam ring (24) and engaging into a pin receiving means (34) of the clamping piston (7).

6. A ball pin chuck according to one of claims 1 to 5 **characterised in that** there is provided a displacement means (28) for adjusting the pull-down force by way of the spring (21).

7. A ball pin chuck according to claim 6 **characterised in that** the displacement means (28) is formed by a displacement screw arranged in the chuck plate (3), for compression of the spring (21).

8. A ball pin chuck according to one of claims 1 to 7 **characterised in that** the ball pin (14) is mounted in the chuck plate (3) by means of a guide portion (14).

9. A ball pin chuck according to claim 8 **characterised in that** the ball pin (4) is secured by a ring (17) in a receiving means of the guide portion (14).

10. A ball pin chuck according to claim 9 **characterised in that** the ring (17) is in the form of a screwthreaded ring with a male screwthread which can be screwed into a female screwthread of the guide portion (14).

11. A ball pin chuck according to one of claims 8 to 10 **characterised in that** the ball pin (4) has a pin projection with a first guide surface (15) provided for co-operation with the guide portion (14).

12. A ball pin chuck according to one of claims 8 to 11 **characterised in that** the guide portion (14) has a second guide surface (36) for alignment with respect to the chuck body (2).

13. A ball pin chuck according to one of claims 8 to 12 **characterised in that** clamping claws (18) are mounted pivotably between a retaining position and a change position on the chuck plate (3) for securing the guide portion (14).

14. A ball pin chuck according to one of claims 1 to 13 **characterised in that** a ring (9) intended for co-operation with the inclined taper surfaces (8) of the ball pin (4) is mounted in the clamping piston (7) rotatably between two retaining seats (10, 11).

15. A ball pin chuck according to claim 14 **characterised in that** to provide the retaining seat (10, 11) in the ring (9) there are provided a retaining pin (12) which is subjected to the force of a spring and two retaining recesses (13) in the clamping piston (7).

## Revendications

1. Mandrin à axes à rotules comprenant un piston de serrage (7) qui est disposé avec possibilité de déplacement axial dans un corps de mandrin (2) et est couplé à une pluralité d'axes à rotules (4) associés au corps de mandrin (2) et agencés en vue de la fixation des mâchoires de serrage (5), **caractérisé en ce que** les axes à rotules (4) sont disposés sur une plaque de mandrin (3) montée avec possibilité de réglage axial par rapport au corps de mandrin (2), à l'encontre de la force d'un ressort (21), au nombre d'au moins un, et **en ce qu'**un élément de manoeuvre (22) peut être déplacé entre une position de blocage empêchant le déplacement élastique de la plaque de mandrin (3) et une position de traction vers le bas, autorisant ce déplacement élastique.

2. Mandrin à axes à rotules selon la revendication 1, **caractérisé en ce que** la plaque de mandrin (3) est fixée à des colonnes de guidage (19) coulissant dans des logements de guidage (20) du corps de mandrin (2).

3. Mandrin à axes à rotules selon la revendication 2, **caractérisé en ce que** l'élément de manoeuvre (22) est formé d'un anneau à came (24) qui est monté sur le corps de mandrin (2), avec possibilité de rotation autour de l'axe de mandrin (23), et est destiné à coopérer avec les extrémités libres des colonnes de guidage (19).

4. Mandrin à axes à rotules selon la revendication 3, **caractérisé en ce qu'**un collet annulaire (25) est réalisé aux extrémités libres des colonnes de guidage (19), lequel collet s'engage dans une gorge annulaire périphérique aménagée dans les logements de guidage (20) et est appliqué contre le fond de gorge (27) lorsque l'anneau à came (24) occupe sa position de blocage.

5. Mandrin à axes à rotules selon la revendication 3 ou 4, **caractérisé en ce qu'**il est prévu un organe de verrouillage (32) qui peut être déplacé au moyen d'une clé (29) dans un logement de guidage (33) radial, entre une position engagée dans l'anneau à came (24) et une position libérant l'anneau à came (24), dans laquelle l'organe de verrouillage pénètre dans un logement de tige (34) du piston de serrage (7).

6. Mandrin à axes à rotules selon une des revendications 1 à 5, **caractérisé en ce qu'**il est prévu un moyen de réglage (28) destiné à régler la force de traction vers le bas par l'intermédiaire du ressort (21).

7. Mandrin à axes à rotules selon la revendication 6, **caractérisé en ce que** le moyen de réglage (28) est formé d'une vis de réglage, destinée à comprimer le ressort (21), qui est disposée dans la plaque de mandrin (3).

8. Mandrin à axes à rotules selon une des revendications 1 à 7, **caractérisé en ce que** l'axe à rotule (4) est monté dans la plaque de mandrin (3) à l'aide d'une pièce de guidage (14).

9. Mandrin à axes à rotules selon la revendication 8, **caractérisé en ce que** l'axe à rotule (4) est tenu par une bague (17) dans un logement de la pièce de guidage (14).

10. Mandrin à axes à rotules selon la revendication 9, **caractérisé en ce que** la bague (17) est conformée en bague filetée, avec un filetage extérieur qui peut être vissé dans un taraudage de la pièce de guidage (14).

11. Mandrin à axes à rotules selon une des revendications 8 à 10, **caractérisé en ce que** l'axe à rotule (4) présente une tige d'axe comportant une première surface de guidage (15) destinée à coopérer avec la pièce de guidage (14).

12. Mandrin à axes à rotules selon une des revendications 8 à 11, **caractérisé en ce que** la pièce de guidage (14) présente une deuxième surface de guidage (36) destinée au positionnement par rapport au corps de mandrin (2).

13. Mandrin à axes à rotules selon une des revendications 8 à 12, **caractérisé en ce que** des griffes de serrage (18), destinées à la fixation de la pièce de guidage (4), sont montées sur la plaque de mandrin (3) avec possibilité de pivotement entre une position d'encliquetage et une position de changement.

14. Mandrin à axes à rotules selon une des revendications 1 à 13, **caractérisé en ce que** dans le piston de serrage (7), une bague (9), prévue pour coopérer avec les chanfreins (8) de l'axe à rotule (4), est montée avec possibilité de rotation entre deux éléments d'encliquetage (10, 11).

15. Mandrin à axes à rotules selon la revendication 14, **caractérisé en ce que**, pour réaliser l'élément d'encliquetage (10, 11), il est prévu, dans la bague (9), une tige d'encliquetage (12), sollicitée par la force d'un ressort, ainsi que deux creux d'encliquetage (13) réalisés dans le piston de serrage (7).
